# EUROPEAN PATENT SPECIFICATION

(11) **EP 2 376 585 B1**
(45) Date of publication and mention of the grant of the patent: **26.07.2017**
(21) Application number: 09796216.1
(22) Date of filing: 18.12.2009
(51) Int. Cl.: B32B 27/20, B32B 27/30, C09J 7/02, B32B 5/14, B32B 7/06, B32B 7/12, B32B 27/10, B32B 27/28, B32B 27/32, B32B 27/36

(54) **LAYERED MATERIAL CONTAINING POLYVINYL BUTYRAL**
SCHICHTMATERIAL ENTHALTEND POLYVINYLBUTYRAL
MATERIAU STRATIFIE COMPRENANT DE BUTYRAL DE POLYVINYLE

(30) Priority: 22.12.2008 EP 08172641
(43) Date of publication of application: 19.10.2011
(73) Proprietor: 3M Innovative Properties Company, St. Paul, MN 55133-3427 (US)
(72) Inventor: NGUYEN, Trung Kien,, 41453 Neuss (DE); NGUYEN, Quoc Hiep,, 41453 Neuss (DE); NEUMANN, Bernd,, 41453 Neuss (DE)
(74) Representative: Vossius & Partner Patentanwälte Rechtsanwälte mbB
(86) International application number: PCT/US2009/068622
(87) International publication number: WO 2010/075192

(56) References cited:
- EP-A- 1 892 689
- DE-A1- 19 526 912
- US-A- 5 688 573
- US-A- 5 912 204
- US-A1- 2005 153 106
- Bruce Wade: "Vol. 8 VINYL ACETAL POLYMERS", Encyclopedia Of Polymer Science and Technology, 15 April 2003 (2003-04-15), pages 381-399, XP055118702, Retrieved from the Internet: URL:http://onlinelibrary.wiley.com/store/1 0.1002/0471440264.pst473/asset/pst473.pdf? v=1&t=hvdr82ka&s=8a678b815de5783bbc9215514 73db684770d1d83 [retrieved on 2014-05-19]

## Description

### Field

The present disclosure relates to layered materials containing polyvinyl butyral, methods of making them and the use of the layered materials for making labels or decorative films.

### Background Art

Polymeric films such as plasticized polyvinyl chloride films have been used for many years as backings for adhesive labels, tapes or decorative sheet materials. They have found wide acceptance because they are weather resistant and can be easily coloured with pigments and dyes. However, halogen-containing materials have been recognized as producing undesirable gases which may be corrosive, present a health risk or might be damaging to the atmospheric ozone layer. The generation of corrosive and/or hazardous by-products has been a concern in particular in processes where the polymeric films may be treated with irradiation, such as electron beam- treatment or laser treatment.

Irradiation has been employed to create patterns displaying information or decorative images on polymeric films, in particular for labels that might be exposed to solvents or hydrocarbon fumes which may dissolve the ink or dyes used in printing or coating. Patterns displaying information or images can be created on polymeric films by marking them accordingly with an irradiation beam. For example, laser-markable materials, such as adhesive labels, typically contain a polymeric base layer with an adhesive layer on one surface and a polymeric top layer on its opposite surface. Base and top layers are typically pigmented in contrasting colours. To form an image or a pattern displaying pieces of information, the areas of the top film are ablated and thus removed by treatment with a laser beam. The ablated areas expose the differently colored base layer and thus generate a pattern.

Various materials have been developed that are laser-markable but do not contain halogens. For example, an acrylic-urethane sheet material has been proposed in European Patent No EP 0 617 711 B1. In US Patent No. 5,688,573 a radiation-markable acrylic-urethane sheet material is disclosed containing components A, B and C wherein component A comprises an ester of acrylic or methacrylic acid, B comprises an aliphatic polyester diol and C comprises a polyfunctional isocyanate or blocked isocyanate. Polymeric materials based an acrylates have also shown good resistance to solvent or fumes.

Although these polymeric films are suitable radiation-markable materials, there is the need to provide alternative materials. Desirably such materials are easily markable by irradiation. Desirably, such materials also show good resistance to exposure of hydrocarbon fumes.

### Summary

In the following there is provided a layered material comprising
(i) a first layer comprising polyvinylbutyral (PVB) and a polyester, wherein the polyvinylbutyral is cross-linked with the polyester, and
(ii) a second layer comprising an adhesive, wherein the first layer comprises irradiation-treated areas, and wherein the irradiation is laser irradiation.

Furthermore there is provided an article to which the layered material has been adhered by the second layer of the layered material.

in another aspect there is provided a method of making a decorative film or a label comprising
a) providing a layered-material containing a first layer containing polyvinylbutyral and a polyester, wherein the polyvinylbutyral is cross-linked with the polyester, and a second layer containing an adhesive,
b) treating the first layer with laser irradiation to generate a pattern displaying information or an image.

It has been found that the layered material provided herewith can be marked by irradiation to create patterns displaying information or decoration. Therefore, the layered material may be used in articles displaying information such, as for example, labels. Moreover, it has been found that the layered materials, and in particular the layer containing polyvinyl butyral is resistant to solvent fumes from polar and non-polar hydrocarbons, in particular when cross-linked and even more particular when cross-linked with a polyester. Furthermore, it has been found that the layered material and in particular the layer containing a poly vinyl butyral can be easily marked by laser irradiation. Thus, it is possible to laser-ablate the surface of the layer to create pattern of ablated and non-ablated areas in a controlled way. This allows the use of lower laser energy but also the use of thin layers or the use of materials in the preparation of labels that so far may have not been used in laser-markable labels due to their decomposition at strong laser irradiation.

The present invention is defined as in the appended claims.

Some specific embodiments can be summarized as follows:
1. A layered material comprising
   (i) a first layer comprising polyvinylbutyral (PVB) and a polyester, wherein the polyvinylbutyral is cross-linked with the polyester, and
   (ii) a second layer comprising an adhesive, wherein the first layer comprises irradiation-treated areas, and wherein the irradiation is laser irradiation.
2. The layered material according to 1. wherein the irradiation-treated areas form at least one number, at least one letter, at least one geometrical shape, at least one symbol, or a combination thereof.
3. The layered material according to 1. or 2. wherein the layered material comprises laser-sensitive pigments. Preferably the first layer comprises laser-sensitive pigments.
4. The layered material according to any one of 1. to 3. wherein the first layer is colored and wherein the layered material further contains a third layer, the third payer being positioned between the first layer and the second layer and wherein the third layer is colored differently than the first layer.
5. The layered material according to 4. wherein the third layer is separated from the first layer by one or more transparent layers.
6. The layered material according to 4. or 5. wherein the irradiation treated areas are irradiation-ablated and have a depth such that the third layer or one or more of transparent layers covering the third layer are exposed.
7. The layered material according to any one of 1. to 6. wherein the layered material is in the form of a sheet.
8. The layered material according to any one of 1. to 7. wherein the layered material is in the form of a sheet wound up in a roll.
9. The layered material according to any one of 1. to 8., wherein the layered material is a label or a decorative film.
10. An article to which the layered material of any one of 1. to 9. has been adhered by the second layer of the layered material.
11. The article according to 10. wherein the article is selected from fuel managing systems, engines, fuel reservoirs, bodies of vehicles or a component thereof.
12. A method of making an irradiation-treated layered material comprising
   a) providing a layered-material containing a first layer containing polyvinylbutyral and a polyester, wherein the polyvinylbutyral is cross-linked with the polyester, and a second layer containing an adhesive,
   b) treating the first layer with laser irradiation to generate a pattern displaying information or an image.
13. The method of 12. wherein the pattern comprises at least one number, at least one letter, at least one geometrical shape, at least one symbol, or a combination thereof.
14. The method of 12. or 13. wherein the layered material comprises laser-sensitive pigments.
15. The method of 12., 13. or 14. wherein the first layer is colored and wherein the layered material further contains a third layer, the third layer being positioned between the first layer and the second layer and wherein the third layer is colored differently than the first layer.
16. The method of 15 wherein the third layer is separated from the first layer by one or more transparent layers.
17. The method of any one of 15. or 16. wherein the first layer is treated by irradiation such that the treated areas are irradiation-ablated and have a depth such that the third layer or one or more of transparent layers covering the third layer are exposed.
18. The method of any one of 12. to 17. wherein the layered material is in the form of a sheet.
19. Use of a layered material comprising:
   (i) a first layer containing polyvinylbutyral and a polyester, wherein the polyvinylbutyral is cross-linked with the polyester, and
   (ii) a second layer comprising an adhesive in the preparation of a laser-markable label or a decorative film.
20. The use of 19. wherein the layered material comprises laser-sensitive pigments.
21. The use of 19. or 20. wherein the first layer is colored and wherein the layered material further contains a third layer, the third layer being positioned between the first layer and the second layer and wherein the third layer is colored differently than the first layer.

### Detailed Description

Before any embodiments of this disclosure are explained in detail, it is to be understood that the disclosure is not limited in its application to the details of construction and the arrangement of components set forth in the following description. The invention described herein is capable of other embodiments and of being practiced or of being carried out in various ways. Also. it is to be understood that the phraseology and terminology used herein is for the purpose of description and should not be regarded as limiting. Contrary to the use of "consisting", the use of "including," "comprising," or "having" and variations thereof herein is meant to encompass the items listed thereafter and equivalents thereof as well as additional items. The use of "a" or "an" is meant to encompass "one or more". Any numerical range recited herein includes all values from the lower value to the upper value. For example, if a concentration range is stated as 1% to 50%, it is intended that values such as 2% to 40%, 10% to 30%, or 1.5 % to 3.9 %, etc., are expressly enumerated. These are only examples of what is specifically intended, and all possible combinations of numerical values between and including the lowest value and the highest value enumerated are to be considered to be expressly stated in this application.

The layered materials provided herewith comprise at least a layer containing a polyvinyl butyral (also referred herein above and below as "top layer" or "first polymeric layer" or "first layer") and an adhesive layer (also referred to herein above and below as "second layer"). The polyvinyl butyral (PVB) containing layer may comprise at least one set of coloring additives. The coloring additives may be dispersed or dissolved within the layer or they may be located on the surface of the layer (for example by coating them onto the layer). Therefore, the first layer may be colored.

The layered materials provided herewith may further comprise another colored layer. This further layer typically comprises a polymeric resin and a second set of coloring additives being different from the first set of coloring additives. This layer is also referred to herein as "base layer", "second polymeric layer" or "third layer". The second polymeric layer may also comprise a polyvinyl butyral, which may be identical or different to the polyvinyl butyral of the first polymeric layer.

The layered materials are markable. For example, they are markable by irradiation, preferably by laser irradiation. The materials are markable at least by irradiation with a Nd: YAg or Nd:YVO4 laser (e.g. 1064 nm wave length). Typically a 10 µm thick first polymeric layer may be completely ablated (i.e. having an ablation depth of 10 µm) using a laser at at least 20 A, preferably at least 24 A, at a frequency of 15 to 80 kHz with a laser speed of 1000 mm/s.

Irradiation, in particular laser irradiation may be used to create images or patterns displaying information. This pattern may generate an image or display information, for example the pattern generated by the ablated areas may be in the form of a series of letter, numbers, symbols, geometrical shapes or combinations thereof.

This pattern may be generated or may be rendered visible by a color change in the first layer upon laser irradiation, for example when using laser-sensitive pigments, i.e. pigments that change color upon irradiation with a laser beam. The areas treated by irradiation then have a different color than those not treated by laser irradiation.

Alternatively, or in addition to the embodiment described above, the first layer may be partially ablated by a laser beam in order to create ablated and non-ablated areas, preferably a pattern of ablated and non-ablated areas. The pattern can be rendered visible (or more visible) by printing or coating ink on the (non-ablated) surface of the film. Patterns may also be created by an arrangement of two or more polymeric layers, a first layer and at least one base layer arranged between the first layer and the adhesive layer. The base layer may have the same or a different polymer composition than the top layer but top and base layer contain a different set of coloring additives and are thus colored differently or are otherwise visibly discernable from each other (example by a different degree of transparency). Ablating areas of the top layer exposes the underlying base layer, which thus becomes visible only at the irradiation-treated areas, by which a pattern can be generated in a controlled way. Preferably, the base layer is placed directly underneath the first layer, such that ablating parts of the first layer to a sufficient depth across the thickness of that layer exposes the base layer underneath the ablated parts. A black and white pattern can be generated for example, by using a white base layer and a black first layer. However, it is also possible that the base layer is not placed directly underneath the first layer but is separated from it by one or more transparent and colorless layers.

It is to be understood that although the layered materials provided herein, more particularly the polyvinyl butyral containing layer of the layered material, are easily markable by laser irradiation, the materials, more particular the PVB-containing layer may also be marked -alternatively or in addition to irradiation- by other methods, including, for example but not limited to, non-irridiation etching (e.g. chemical etching), engraving, molding and the like.

Therefore, the material provided herewith may contain at least one polyvinyl butyral containing layer that comprises irradiation-treated areas, or more particularly irradiation ablated and non-ablated areas. These ablated areas are or comprise laser-ablated areas and preferably generate a pattern displaying information, such as, for example, a combination of letter and/or numbers.

Therefore, the layered materials provided herewith may be used in the preparation of labels and decorative films. They may also be suitable for the manufacture of optically readable articles, such as laser-markable identity cards, teller cards and the like.
When using electronically conductive materials to fill the ablated areas or in a base layer which is then exposed by laser ablation, electronically readable devices may be generated, for example, electronically readable labels.

Labels as referred to herein are individual pieces of layered material containing a polymer layer and an adhesive layer which allows the layered material to be affixed to an article and wherein the polymer layer displays information, such as for example a combination of numbers and/or letter, the identification of a product, person, manufacturer, proprietor and the like, warnings, instructions and the like.
The labels provided herewith contain at least one polymer layer containing polyvinyl butyral (PVB). This PVB layer is as described above and below.

The individual pieces (labels) can be of any shape but typically are of elongated shape or sheet like with the top the bottom surface being made up by the adhesive layer. Labels typically may have a thickness of up to 5mm, up to 10 mm, up to 1 cm, up to 2 cm, or even up to 5 cm. The materials provided herewith may be used in labels having a thickness of up to 5 mm, 10, mm, 1cm, 2 cm or up to 5 cm.

Labels can be provided in its non-applied form, which means where there are not attached to an article or a surface. In this case the label typically contains a further layer. That further layer is placed underneath the adhesive layer covering the adhesive layer from the outside. This layer is a protective layer and is removable from the adhesive layer such that the adhesive layer has sufficient thickness to provide adhesion to a surface. This protective layer is referred to in the art as a "release liner". The release liner is removed before the label is applied to a surface and article thus exposing the adhesive layer to the outside. The release liner is a material that typically has a lower surface energy than the adhesive layer. It can be removed from the adhesive layer, such that the adhesive layer remains sufficiently intact such that the layered material can be adhered to a substrate, such as, for example, a metal, plastic or polymer.

The layered material, preferably the layered material containing a release liner covering the external surface of the adhesive layer (second layer), is generally flexible. This means the layered material can be wound up in a roll without breaking. Generally, the material can be wound up around a metal rod having a diameter of 1 cm.

The layered material, preferably when wound up in a roll, may be a precursor of a label, i.e. it has not been treated to contain information. Such materials, i.e. layered materials as described above but that have not yet been treated by irradiation to created patterns displaying information, are referred to as label precursors or "labelstocks". Labelstocks may be unwound, subjected to irradiation, such as laser irradiation, to generate a pattern displaying information (such as a sequence of number and or letters, symbols and geometric forms) and subsequently or simultaneously cut into the desired sizes of the label.

The first layer of the layered material typically has a thickness of from 5 to 20 µm. The first layer, typically arranged at the top of the layered material is the layer where the information displaying pattern is typically created, for example by removing parts of the layer, like for example by ablation through irradiation. It is to be understood that also thicker top layers may be used, in particular when the layered material only contains a single polymeric layer. This may then require more energy to create a pattern than in a thinner top coat. It is also understood that the first layer or "top coat" may be the layer that is exposed to the outside but that it may also be covered by one or more layers, typically colorless and transparent layers, for example to protect the first layer from degradation, soiling or aging.

If a multi-layer construction comprising a top layer (first layer) and at least one base layer (third layer), a base layer may typically have a thickness of from 30 to 150 µm or to 300 µm.

The adhesive layer may typically have a thickness of from 10 to 300 µm.

The material may further comprise release liners protecting the adhesives layer and/or the top layer and which are to be removed either before marking the top layer of the before affixing the material to an article by its adhesive layer.

The thickness of the individual layers can be adjusted to meet the desired requirements of the layered material, for example with regard on the end use of the label and with regard to the flexibility of the layered material, for example to make it flexible enough to be wound up in a roll.

The first polymeric layer may also be covered from the outside by one or more further, socalled, overcoat layers. The overcoat layer may or may not be removable from the first polymeric layer. It may be used to protect the first polymeric layer or to add further information which could be displayed by the layered material when used as label or decorative film, for example by providing one or more layer containing an emblem or in-mold logo as described, for example, in international patent application WO 2008024693 to Nguyen et al. The overcoat layers may be of the same or different chemical composition than the top layer. The overcoat layers may be clear or (partially) coloured or emblem-carrying, for example displaying a logo or other types of information or decoration. Such overcoat layer may also or alternatively be placed between top layer and base layer. This way a 3D-like image or pattern may be generated, for example a manufacturer's logo may be displayed by the overcoat layer and specific information relating to use or instructions are generated through laser ablation of the top coat and exposing the differently colored base coat at areas where the overcoat is transparent. Such overcoat layers may typically have a thickness of 20 to 50 µm.

### Polyvinyl butyrals

Polyvinyl butyrals (PVB's) have long been known and are commercially available (compare e.g. Römpp Lexikon Chemie, version 2.0, Stuttgart/New York, Georg Thieme Verlag 1999). Typically PVB's have found commercial application in the preparation of security glasses. PVB's may be obtained by reaction of polyvinyl alcohol with butyraldehyde to form acetals. The reaction may not be complete such that the polyvinyl butyrals may contain unreacted polyvinyl alcohol units. Typically, a polyvinyl butyral contains free (reactive) hydroxyl groups and can be cross-linked. The polyvinyl butyral may contain amounts of from 0.5 to 70 % wt, or from 5 to 20% wt of unreacted polyvinyl alcohol.
The term polyvinyl butyrals is meant to include homo and copolymers of polyvinyl butyrals. In one embodiment, the poly vinyl butyral is a homopolymer.

The polyvinyl butyral may have an average molecular weight (g/mol) between 10,000 to 2,500,000, preferably between about 10,000 and 250,000. Preferably the average molecular weight is the weight average.
The polyvinyl butyrals may be cross-linked or non-cross-linked. Cross-linking may be achieved by thermal curing and/or by using cross-linking agents. In a preferred embodiment, the polyvinyl butyrals are cross-linked.

The polyvinyl butyral containing layer of the layered material also comprise one or more polyester. The polyester may be cross-linked or non-cross-linked. The polyester is cross-linked with the polyvinyl butyral or it may have been introduced into the polyvinyl butyral resin as a copolymer.

### Polyester resins

Polyester resins include hydroxyl-functional polyester resins. Hydroxy-functional polyester resins may include any polyester having at least two hydroxy-functional groups. The hydroxy-functional polyester resin may be a saturated or unsaturated polyester resin, an alkyd resin, a polycarbonate or a polylactone, preferably a saturated polyester resin or a polylactone, more preferably a saturated polyester resin.

Saturated hydroxy-functional polyester resins, also oil-free alkyd resins, which include branched or non-branched aliphatic polyester diols or polyols, may be produced by polycondensation of polyols with poly-functional, saturated carboxylic acids or acid anhydrides. Unsaturated hydroxy-functional polyester resins may be based on polycondensation products of mixtures of poly-functional carboxylic acids or acid anhydrides, in which one compound is unsaturated, and diols or polyols. Alkyd resins may be based on polycondensation products of mixtures containing poly-functional, saturated or unsaturated carboxylic acids or acid anhydrides, diols or polyols and saturated or unsaturated fatty acids or oils, such as triglycerides. Polycarbonate may be prepared by the reaction of diols with phosgene. Polylactones, e.g. polycaprolactones, can be produced by the polyaddition of caprolactone to diols. Suitable diols and polyols include ethylene glycol, 1,2- propane diol, diethylene glycol, 2-methyl 2-ethyl 1,3 propane diol, 1,4-butane diol, 1,6-hexane diol, neopentyl glycol, trimethyl pentane diol, 1,4-cyclohexane dimethanol, tricylcodecane dimethanol, trimethylol propane, glycerol, hydroxypivalic acid neopentyl glycol ester, pentaerythritol, dipentaerythritol, hydrogenated bisphenol A, bisphenol A-bis-hydroxyethylether, caprolactonediol and similar compounds. Suitable saturated carboxylic acids include isophthalic acid, terephthalic acid, hexahydroterephthalic acid, 5-tert-butylisophthalic acid, adipic acid, azelaic acid, sebacic acid, glutaric acid, chlorendic acid and similar compounds, while suitable saturated acid anhydrides include phthalic anhydride, hexahydrophthalic anhydride, tetrahydrophthalic anhydride, trimellitic anhydride, pyromellitic anhydride and similar compounds. Suitable unsaturated acid components include maleic acid, fumaric acid and their anydrides and Diels-Alder adducts made from maleic anhydride and cyclopentadiene.

The polyesters preferably have an average molecular weight of 10,000 to 40,000 g/mol. The average molecular weight preferably is the weight average molecular weight. It can be measured by GPC (gel permeation chromatography).

The hydroxyl-functional polyesters preferably have a hydroxyl value of between 20 and 45 mg KOH/g. The hydroxyl-functional polyesters may have an acid value between about 6 and about 20 mg KOH/g.

The degree of cross-linking and the flexibility of the polymeric film product can be in part adjusted by the initial hydroxy content of the hydroxy-functional polyester applied in the precursor mixture and can be adapted to the desired end use of the films.

Preferably, the polyesters are cross-linked with the polyvinyl butyrals.

The polyesters may be used in a lower amount or equal amount than the polyvinyl butyral for preparing the PVB-containing layer.

Cross-linking may be achieved by thermal treatment, for example baking the polymeric material at appropriate temperature, e.g. at temperature 150° C. Cross-linking may also be achieved by using cross-linking agents.

### Cross-linking agents

Any cross-lining agent known for cross-linking resins containing OH-groups may be used. Such cross-linking agents include isocyanates, such as aliphatic diisocyanates or blocked ioscyanates. The isocyanate moiety is transformed with suitable blocking agents into another moiety which can be regarded as a latent isocaynate group. Suitable blocking agents are, for example, those that unblock at elevated temperatures, thus generating again the isocyanate group. Preferably, the cross-linking agents are selected from triazines and triazine resins, urea-formaldehydes and urea-formaldehyde resins, cyanamides and cyanamide resins, glycoluril resins and mixtures thereof. Preferably, the cross-linking agent is a triazine or a triazine resin. More preferably, the cross-linking agent is a triazine or triazine resin selected from the group consisting of melamine or melamine resins, guanamine or guanamine resins and mixtures thereof. Guanamine resins include benzoguanamine resins. Most preferred are melamines or melamine resins as the cross-linking agent. Suitable melamine resins include melamie-formaldehyde resins, alkylated melamine-formaldehyde resins and mixtures thereof. Alkylated melamine-formaldehyde resins include methylated and/or butylated melamine-formaldehyde resins having a high degree of alkylation. Alkylated melamine-formaldehyde resins such as methoxymethyl butoxymethyl melamine resin, methoxymethyl isobutoxymethyl melamine resin, hexamethoxy methyl melamine resin, methoxy ethoxy melamine-formaldehyde resin and mixtures thereof, have been found to be particularly suitable as cross-linking agent.

Cross-linking agent or agents may be present in polymeric layers in amounts of from 10 to 30% by weight, preferably in amounts from 10 to 25% by weight; the percentages of weight being based the total amount of polymer, preferably PVB's, in the layer.

The polymeric material may contain coloring additives and may further comprise a solvent, a wetting additive and/or a catalyst.

### Coloring Additives

The layered material may contain one or more additives which render the ablated areas visually discernable from the non-ablated areas.

Such additives comprise, in particular, colouring agents such as inorganic pigments including metallic pigments or metallic flakes, such as aluminium flakes or particles, organic pigments, water-borne or solvent-borne inks or dyes, and/or inorganic microspheres and/or beads such as, for example, glass beads. These additives may be selected so that the ablated areas become visually discernible from the surrounding non-ablated areas by the unaided eye under normal ambient light conditions. It is also possible that the additives are selected so that the ablated areas are visibly discernible when viewing them through magnifying glasses or a microscope, respectively, or upon irradiating the layered materials with UV light, IR light or viewing it under retroreflective lighting conditions. For example, partially metallized glass beads or a combination of glass beads which may or may not be metallized, with metal flakes exhibit retroreflective properties. The term "partially metallized glass beads" refers to glass beads 20 - 60 % of the surface of which are coated with a thin metal film which may be applied, for example, by CVD or PVD techniques. The use of glass beads which may or may not be aluminized in combination with aluminium and/or silver flakes or particles is preferred. Glass beads are preferably essentially spherical. Typically the spheres have a diameter of between 40-60 µm.

Inorganic pigments are also suitable and include, for example, titanium dioxide, carbon black, vegetable black, iron oxide pigments, cadmium pigments, lead chromate pigments, chromium oxide pigments including chromium oxide green, ultramarine blue, chrome green, phthalo chrome green, mixed metal oxide pigments and bi-vanadates.

Organic include, for example, azo pigments, polycyclic pigments and metal complex pigments. Suitable azo pigments include, for example, monoazo yellow and orange pigments, disazo pigments, naphthol pigments, benzimidazolone pigments and disazo condensation pigments. Suitable polycyciic pigments include, for example, phthaiocyanine pigments, quinacridone pigments, peryiene and perinone pigments, thioindigo pigments, anthraquinone pigments, dioxazine pigments, isoindoiinone and isoindoiine pigments, diketopyrrolo pyrroie pigments, triaryicarbonium pigments and quinophthaione pigments.

Commercially available inorganic pigments which are suitable for use in the layered materials include, for example, carbon black available as carbon black paste from Degussa, Germany. As a white coloured pigment, titanium dioxide in silane modified form can be used (Kronos CL 310, Kronos Titan, Leverkusen, Germany). Lead sulfo-chromate pigments and mixed crystal lead sulfo-chromate-molybdate pigments are available from Heubach as Heucotron T and Heucotron T Orange 8010, respectively. Also aluminium particles of 5 µm length in a solvent (STAPA- Off-Set 3000, Eckhart-Werke, Fürth, Germany) can be used.

Commercially available organic pigments include isoindolininone yellow commercially available as Cromophtal Yellow 2RLTS from Ciba; peryiene red commercially available as Irgazin Red BPTN from Ciba; pthalocyanine green, a halogenated Cu-phtalocyanine commercially available as Chomophtal Green GFN from Ciba; quinacridone violet commercially available as Cinquasia Violet RRT- 899D from Ciba; C. I. pigment red 178/71155 (Paliogen rot L3910 HD, BASF, Ludwigshafen, Germany); C. I. pigment yellow 110 (Irgazin gelb 3RLT-N, Ciba- Geigy, Marienberg, Germany); and C. I. pigment blue 1511 , Heliogen blau K6911 D, BASF, Ludwigshafen, Germany).

Pearlescent pigments that subtly change colour as the viewing angle is changed can be obtained, for example, from Merck KGaA, Darmstadt, Germany, under the Iriodin trade designation.

Liquid crystal polymer additives which change colour when the viewing angle is changed are also suitable and can be obtained from, for example, Wacker Chemie of Munich, Germany. It is also possible to use up-converting pigments, down-converting pigments or a combination thereof.

Down-converting pigments are pigments that emit UV light upon absorption of light from the visible spectrum. Preferred are down-converting pigments having an average particle size greater than 1 µm or greater than 1.5 µm. An example of a down converting additive which is invisible under ambient light but visible under UV light is Black Light Varnish available from Wernecke of St. Paul, MN, USA. Other examples are fluorescent or phosphorescent pigments such as rare earth metals or rare earth metal oxides, e.g. neodymium oxides. A suitable fluorescent pigment is available from Honeywell under the trade designation Lumilux Effect Blue SN. Examples of phosphorescent pigments include the Lumilux Phosphorescent pigments series available from Honeywell such as those available under the trade designation Luminux green SN-F5, Lumilux Green N5 or Lumilux C-Pigments.

Exemplary up-converting (anti-stoke's) pigments are materials capable of emitting electromagnetic radiation of greater energy upon absorption of electromagnetic radiation of lower energy. For example, the up-converting pigments may be capable of absorbing infrared radiation and emitting radiation in the visible spectrum (e.g. from 400 nm up to less than 700 nm wavelength), e.g. pigments that emit green light upon irradiation with infrared light (e.g. radiation of from 700 to 1300 nm wave length). It is also possible to use an up- converting pigment which is excited by electromagnetic radiation of the visible spectrum and emits UV light (e.g. radiation of a less than 400 nm up to less than 250 nm wave length). Up-converting pigments are typically inorganic materials doped with erbium (Er), yterbium (Yb) or thulium (Tm), such as for example rare earth metal fluorides doped with rare earth metals or metal ions, such as for example Yb³⁺, Er³⁺, Tm³⁺, Nd³⁺, Ho³⁺, although crystals doped with ions of some transition metals, e.g. Ti²⁺, Ni³⁺, Mo³⁺ or Re⁴⁺ have also been used in the fabrication of up-converting pigments. Typical examples of up-converting pigments correspond to the general formula Nal_nF4: Yb³⁺, Er³⁺ with Ln typically being Y, Gd or La. A particular example is NaYO.57,YbO.39, ErO.39F4. Other examples include oxysulfide doped with rare metals corresponding to the general formula M2O2S: Yb, Tm, Er with M being a lanthanoid or Y, Sc such as for example Gd2O2S: Yb, Tm, Er or Y2O2S2: Yb, Tm, Er. Other examples of crystals that may be doped with such ions include manganese halides and tungstate crystals such as RbMnCl₃, CsMnCl₃, CsMnBr₃, Rb₂MnCl₄ or NaY(WO₄)₂. Examples of suitable up- onverting nanopowders include Al₂O₃ or yttrium aluminium garnet doped with Nd³⁺ or Ce³⁺. Preferably, the up-converting pigments are crystalline.

The coloring agents are typically present in particulate form and may be present as solution or dispersion. The average size of the colouring agents can vary widely. Typically, the coloring agents have an average size (number average) of between 0.2 µm to 50 µm or even more. Titanium dioxide, for example, has a size of typically between 0.2 - 1 µm whereas red iron oxide has typically has an average size of between 0.3 - 3 µm. The average size of metal particles and flakes typically is between 3 - 25 µm, and glass beads have a typical average size of 40 - 60 µm. The person skilled in the art will easily select the appropriate thickness of the polymeric layer(s) in view of the respective average size of the colouring agents used.

In one embodiment the colouring additives are those which exhibit a colour change upon irradiation with an energy source other than visible light, e.g. UV light (e.g. down-converting pigments) IR- light (e.g. up-converting pigments) or laser marking. In some embodiments, the one or more additives included into the polymeric layer of the layered material are present in an amount of from 2 - 70 pph, and, in some embodiments, 2-50 pph (parts per hundred resin) with respect to the mass of the polymeric layer.

### Wetting agents

Wetting agents may support the casting performance of the layers and the formation of a uniform and smooth surface without surface defects and/or pinholes. Suitable wetting agents include acrylate-based polymers, for example, an acrylate-based wetting agent under the trade designation DISPARLON L 1980 from Kusomoto, Japan. The wetting agent can be present in amounts from 0.1 to 2.0% by weight based on total weight of the layer. Further wetting agent include fluorinated surfactants, fluorinated hydrocarbons and the like.

### Catalysts

Catalysts may be used to promote cross-linking reactions of the cross-linking agent with the hydroxyl-functional resins such as PVB and/or polyester resins. Suitable catalysts include but are not limited to alkyl acid phosphates, phosphoric acid, maleic acid and anhydride, fumaric acid, chloromaleic acid and anhydride, alkyl acid phthalates, monoalkyl succinates and maleates. Catalysts which have been found to be particularly suitable are compounds such as sulfonic acids and derivatives thereof including, for example p-toluene sulfonic acid, methyl-p-sulfonic acid dodecyl benzene sulfonic acid and the like, tin(II)salts, for example but not limited to DBTL (di-butyl tin laurate) or tin(II) ethylhexanoate. Catalysts may be present in amounts from 0.1 to 1.0% by weight based on total weight of the layer.

### Adjuvants

The skilled person understands that for adjusting characteristic properties layered materials and for economical reasons fillers, e.g. mica, calcium carbonate kaolin, may be used in preparing the layered materials and may be present in the layers. Further adjuvants include, for example but not limited to, UV-absorber (for example those available under the trade designation Tinuvin Uvinul) and antioxidants (for example, but not limited to those available under the trade designation Irganox).

### Adhesive layer

The adhesive layer contains one or more adhesives. Preferably the adhesives are pressure sensitive adhesives or heat-activatable adhesives. These may comprise adhesives based on polyacrylates, polyesters, polyolefins, polyamides, polyurethanes, silicone polymers, polybutadiene and copolymers, polyisoprenes and copolymers, natural and synthetic rubber as well as hydrogenated derivatives thereof with and without resins, fillers and cross-linking agents.

Polyacrylates have also proven to be useful, particularly those which have been modified for use on a variety of surfaces having very different surface energies, such as steel/polyethylene. Useful alkyl acrylates (i.e. acrylic acid alkyl ester monomers) for the preparation of polyacrylates include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate.

Particularly preferred are acrylate based pressure-sensitive adhesive materials such as copolymers of isooctyl acrylate and acrylic acid like those disclosed in U.S. Patent No. 2,884,126. The adhesive layer may have a thickness of from 10 to 300 micrometer, preferably from 20 to 60 micrometer. The pressure-sensitive adhesives which are particularly preferred are tackified or non-tackified isooctyl acrylate and acrylic acid copolymers. The copolymers are preferably employed in amounts ranging from 50 to 70% and preferably in an amount of about 60 % by weight. As the tackifying resin there is preferably used Foral 85 (company Hercules), a hydrogenated rosin or its glycerol or pentaerythritol esters in amounts of preferably 30 to 50 % and particularly preferred of 40 % by weight. Antioxidants in amounts of about 1% and crosslinkers such as for example aziridine compounds may also be present in the adhesive layer.

### Release liner

The adhesive layer can be protected from the outside by a release liner. The release liner is preferably adhesive-repellent. More specifically, the release liner may comprise paper or a film which has been coated or modified with compounds of low surface energy relative to the adhesive applied. Organo silicone compounds, fluoropolymers, polyurethanes and polyolefins can serve this purpose. The release liner can also be a polymeric sheet produced from an organic polymer, such as for example polyethylene, polypropylene, PVC, polyesters with or without the addition of adhesive-repellant compounds, i.e. compounds having a lower surface energy relative the adhesive, such as those mentioned above. It can be removed from the adhesive layer, such that the adhesive layer remains sufficiently intact so that the layered material can be adhered to a substrate, such as, for example, a metal, plastic or polymer.

The release liner may have a thickness of from 25 micrometer to 250 micrometer, preferably from 80 to 120 micrometer.

### Preparation of layered materials:

A layered material containing polyvinyl butyral, more particularly a layered material containing a layer containing polyvinylbutyral, may be used to prepare laser-markable labels or decorative films. The layered material may be of a composed and configuration as described above, with the exception that the material or the polyvinylbutyral containing layer has not been treated by irradiation, or not by irradiation generating a pattern of irradiated and non-irradiated (or ablated) areas. The layered material may be provided in the form of a roll. The layered material may then be subsequently treated by irradiation to generate patterns displaying information of decoration as described above.

The layered materials may be prepared by a process comprising
a) providing a layered material comprising a first layer comprising as described above and an adhesive layer as described above, wherein the first layer has not been laser-treated to generate a pattern displaying information, and
b) treating the first layer by irradiation to generate pattern of irradiation-treated and non-treated areas. The irradiation may be carried out as described above. The layered material may have the composition and configuration as described above.

In particular, the layered materials can be prepared as follows:
The polyvinyl butyral is mixed with the optional components, such as the hydroxy-functional polyester, solvents, wetting agents, coloring agents and the like. Cross-linking agent and catalyst may then be added to form a precursor mixture. The cross-linking agent and the optional catalyst are preferably added to the mixture directly before the coating operations so that a premature cross-linking reaction is avoided. Preferably, a solution or dispersion of the polyvinyl butyral in an organic solvent (e.g. but not limited to butanols, xylene or mixtures thereof) is prepared first and the other ingredients are subsequently added.

The precursor mixture may have a Brookfield viscosity in the range of 500 to 4,500 mPa.s. The precursor mixture may have a solid content in the range of 30 to 99%.

A layer of the precursor mixture is cast from organic solvent onto a removable support. The term removable support means an intermediate carrier. The removable support must have release properties and can be used also for surface modifying of the film, which is cast onto the removable support. The releasing properties are essential for easy and complete removal of the film. The removable support should not be removed before the films arranged on the support are self-supporting during further processing.

Casting from organic solution can be performed in a variety of ways. The solution may be laid down by means of screen printing, spraying, reverse rotogravure or more traditional coating methods such as knife coating. Preferably the precursor mixture is arranged on the removable support by screen-printing or knife coating depending on the desired thickness of the layer.

The layer of the precursor mixture may then be cured, preferably by subjecting the layer to a series of heat treatments with increasing temperatures, for example starting at 23°C and finishing at 200°C.

After curing, the removable support can, if desired, be removed from the film to provide a self-supporting film. Under the term self-supporting is to be understood that the film has sufficient internal strength to be handled alone. The self-supporting film thus prepared can be further processed, as desired and known in the art, to provide a laser-markable and/or laser cuttable article.

To provide a multi-layer sheet material, the film may then be provided with a self-adhesive layer. This may be achieved by laminating the film with an adhesive layer, optionally covered by a release liner, to form a multi-layer sheet material.

Alternatively, it is possible to leave the film on the removable support after curing and then apply the adhesive layer onto the film and, optionally, cover the adhesive layer with a release liner. Subsequently, the removable support can be removed from the film to provide a multi-layer sheet material. The adhesive layer may be applied onto the film by casting from organic solution or aqueous dispersion or by such techniques as hot melt coating.

To promote adhesion between the film and the adhesive layer, if desired, the film can be treated before the adhesive is applied. This treatment can be the application of a chemical primer or by corona discharge treatment.

Preparing a layered material further comprising a second polymeric film can be carried out in a similar way to the method described above, however with the following exceptions: before step a) the following steps are performed, comprising: 1) providing a precursor mixture for a top film (first polymeric layer); 2) providing a layer of the mixture and curing the mixture to form the top film; and in step b) the layer of the mixture for the base film (second polymeric layer) is provided onto the top film.

For example, if the precursor mixture for the top film, in accordance to a preferred embodiment of the layered material, comprises polyvinyl butyral, cross-linker and optional components, such as the hydroxyl-functional polyester, pigments, solvents, wetting agents and/or catalysts, said precursor mixture can be prepared as above.

The top film can be prepared by casting the precursor mixture for the top film from an organic solvent onto a removable support to provide a layer and then curing said layer as described above.

The top film has preferably a thickness of 2 to 20 micrometer, more preferably 5 to 15 micrometer, most preferably 7 to 12 micrometer.

Once the top film has been prepared, the base film can be produced by the process described above, with the exception that the precursor mixture for the base film is now cast onto the top film, rather than onto the removable support. A self-adhesive layer can then be applied to the base film and optionally covered with a releaser liner as described above. Subsequently the removable support can be removed from the top film to provide a multi-layer sheet material according to a preferred embodiment of the invention.

The preparative procedures as described above are only exemplary and restrict by no means the scope of the present invention.

The layered materials provided may be used in the preparation of labels. In particular for labels to be used on articles that may be exposed to hydrocarbon fumes. Such articles include, for example but are not limited to articles used in vehicles, such as but not limited to fuel management systems, fuel reservoirs, bodies of a vehicle, vehicle frames, door frames in vehicles, bonnets, car trunks or components thereof. The vehicles may be watercraft, aircraft or motor vehicles like cars, trucks, motorbikes and the like. Such articles also include safety-devices where the information displayed should not be removable by treatment with solvents. Such articles include name tags, identity cards, teller cards and the like.

The invention is further illustrated by the following non-limiting examples.

### Examples

### Materials

### Component A (PVB resin):

Mowital B 16 S (Kuraray America, NY 10022, New York, U.S.A), a polyvinylbutyral resin with a molecular weight (g/mol) between 10000 and 25000 and a content of polyvinyl alcohol between 10 and 20 % wt.

### Component B (Polyester resin):

Uralac CP 4079 SN ND (DSM Coating Resins, 8022 AW Zwolle, Netherlands), a saturated polyester resin, dissolved in solvent naphtha.

### Component C (crosslinkers):

C1: Cymel 325 (Cytec Industries B.V, 3197 KA Botlek-Rotterdam, Netherlands), a methylated melamine formaldehyde resin.
C2: Cylink 2000 (Cytec Industries B.V, 3197 KA Botlek-Rotterdam, Netherlands), tris carbamoyl triazine (formaldehyde free).
C3: Desmodur BL 3175 (Bayer Leverkusen, Germany), a blocked multifunctional isocyanate, adduct of 1,6-hexamethylene diisocyanate and 2-butanoneoxime.

### Component D (coloring agents):

D1: Kronos CL2310 (Kronos Titan, Germany), a silane modified titanium dioxide.
D2: Isoveral LM 0677 (ISL Chemie, Germany), a carbon black paste.

### Component E (levelling agent):

3M Novec™ (3M Deutschland GmbH, Neuss, Germany), fluorosurfactant FC 4434.

### Component F (catalyst):

Tin (II)-ethylhexanoate (Alfa Aesar GmbH & Co.KG, Germany).

### Component G (Adhesive):

Transfer Tape 9458 (3M Deutschland GmbH, Neuss, Germany), acrylic pressure-sensitive adhesive transfer tape having a thickness of 0.025 mm.

### Examples 1 to 6

6 different laser-markable layered materials (layered materials 1 to 6) were prepared. Each layered material 1 to 6 had a black top-layer and a white base-layer.
The compositions of the coating mixtures to prepare the layers are shown in Table 1.

**Table 1: composition of coating mixtures to prepare the layers of layered materials 1 to 6**

| Label | | A (pph) | B (pph) | C1 (pph) | C2 (pph) | C3 (pph) | D1 (pph) | D2 (pph) | E (pph) | F (pph) |
|---|---|---|---|---|---|---|---|---|---|---|
| 1 (*) | Top layer | 100 | - | - | - | - | - | 22 | 0.08 | - |
| | Base layer | 100 | - | - | - | - | 12 | - | 0.08 | - |
| 2(*) | Top layer | 100 | - | - | 15 | - | - | 22 | 0.08 | - |
| | Base layer | 100 | - | - | 15 | - | 12 | - | 0.08 | - |
| 3 | Top layer | 100 | 30 | - | 15 | - | - | 22 | 0.08 | - |
| | Base layer | 100 | - | - | 15 | - | 12 | - | 0.08 | - |
| 4 | Top layer | 100 | 30 | 20 | - | - | - | 22 | 0.08 | - |
| | Base layer | 100 | 35 | 25 | - | - | 12 | - | 0.08 | - |
| 5 | Top layer | 100 | 30 | - | - | 20 | - | 22 | 0.08 | - |
| | Base layer | 100 | 35 | - | - | 20 | 12 | - | 0.08 | - |
| 6 | Top layer | 100 | 30 | - | - | 40 | - | 22 | 0.08 | 0.15 |
| | Base layer | 100 | 35 | - | - | 40 | 12 | - | 0.08 | 0.15 |

| | | | | | | | | | | |
|---|---|---|---|---|---|---|---|---|---|---|
| (*) Reference Example | | | | | | | | | | |

### a) Preparation of coating mixtures for making the black top layers of layered materials 1-6

Coating mixtures for the black top layer were obtained by first prepared a PVB resin solution as follows:
30 parts xylene and 30 parts butanol were charged to a vessel. 40 parts polyvinylbutyral resin (component A) was then added to the solvent mixture and mixed/dispersed at a speed of 1500 rpm using a DISPERMAT - High speed dissolver - commercially available from BYK-Gardener GmbH, 82538 Geretsried, Germany- for a minimum of 30 minutes.

Final solids content was at about 40 % wt. To this PVB resin solution the following ingredients were added:
To make the coating mixture of example 1 (Reference Example) black pigment paste Isoveral LM0677 (coloring additive, component D2) was added and mixed in for about 5 minutes at room temperature with a speed of 1500 rpm until a homogeneous blend was achieved.

To make the coating mixture of example 2 (Reference Example) black pigment paste Isoveral LM0677 (coloring additive, component D2) and Cylink 2000 (cross-linking agent, component C2) were added and stirred at room temperature with a speed of 1500 rpm until a homogeneous mixture was obtained.

To make the coating mixture of example 3 CP 4079ND SD (polyester resin, component B) was added at 30 parts per hundred (pph) to the PVB resin solution and then black pigment paste Isoveral LM0677 (compoent D2) was added and mixed in at 1500 rpm for 5 minutes at room temperature.

To make the coating mixture of example 4 melamine solution (cross-linking agent, component C1) was added to the black PVB/ PET blend of example 3 above at 20 pph and mixed at a speed of 1500 rpm at room temperature until a homogeneous mixture was obtained.

To make the coating mixture of example 5 20 parts per hundred of Desmodur BL 3175, a blocked isocycante (cross-linking agent, component C3), was added to the black PVB/PET blend of example 3. Tin (II) ethylhexanoate (catalyst) was added at 0.15 pph.

The coating mixture of example 6 was prepared as the coating mixture of example 5 except that Desmodur BL 3175 was added with 40 parts per hundred to the black PVB/PET blend instead of 20 pph.

Fluorosurfactant FC 4434 (component E) was added at 0.08 part per hundred to all coating mixtures for the black top-layers of examples 1 to 6 prior to the final mixing step to improve the wetting and levelling properties of mixtures.

### b) Preparation of coating mixtures for making the white base layers of layered materials 1-6

Coating mixtures for preparing the white base-layer were obtained by first preparing a PVB resin solution as follows:
30 parts xylene and 30 parts butanol were charged to a vessel. 40 parts polyvinylbutyral resin (component A) was then added to the solvent mixture and mixed/dispersed at a speed of 1500 rpm using a Dispermat© - High speed dissolver - commercially available by BYK-Gardener GmbH, 82538 Geretsried, Germany for 30 minutes. The final solids content was about 40% weight. In a second step the following ingredients were added to make the white coating mixtures of example 1 to 6:
   To make the white coating mixture of example 1 (Reference Example) Kronos CL 2310 (component D1) was added at 12 parts per hundred (pph) and mixed in at room temperature at 1500 rpm until a homogeneous blend was obtained (about 20 minutes).

To make the white coating mixture of example 2 (Reference Example) Cylink 2000 and Kronos CL 2310 were added and stirred until the mixture was homogeneous at room temperature with a speed of 1500 rpm (5 minutes).

To make the coating mixture of example 3 Uralac CP 4079ND SD (component B) was added at 35 parts per hundred (pph) to the PVB resin solution. Kronos CL 2310 (component D1) was then added and mixed in at 1500 rpm for 20 minutes at room temperature.

To make the white coating mixture of examples 4 melamine solution (component C1) was added at 20 parts per hundred to the white PVB/ PET blend of example 3 and mixed at a speed of 1500 rpm at room temperature.

The white coating mixture of examples 5, 6 and 7 were prepared as described in example 4 above except that Desmodur BL 3175 (component C3), a blocked isocyanate, was used instead of melamine cross-linker (component C1). In the coating mixture of examples 5 and 6 Tin (II) ethylhexanoate catalyst was added at 0.15 pph. In the white coating mixture used of example 5 Desmodur BL 3175 was added at 20 pph and in the coating mixture of example 6 Desmodur BL 3175 was added at 40 pph.

Component E was added to all white coating mixtures at 0.08 pph in the final mixing step to improve the wetting and levelling properties of mixtures.

### c) Preparation of layered materials 1 to 6

### c1) Preparation of the release carrier

A casting release carrier comprising a polymer-coated paper was prepared by taking a 108 g HIFI Kraft paper (available from Chem Tenero AG) and coating it with a solution of acrylic release material. The paper was then dried to give a dry coating weight of 32 g/cm². The surface was smooth and glossy and exhibited an average roughness R_{Z} of approximately 1.0 µm.

### c2) Preparation of the layers

The black top-layer coating mixtures were coated onto a release carrier (1) as a polymer layer (2) and oven dried first at 80°C for 2 minutes and then at 195°C for one additional minute. The thickness of each of the black top-layers was about 10 micrometer after drying.
In a second step the white base-layer coating mixtures were coated as polymer layers (3) on top of the black polymer layers (2) and oven dried at 80°C for 3 minutes and then at 200°C for additional 2 minutes. The coating thickness of the white base-layers (polymer layers (3)) was about 50 micrometer after drying.

In a next step, Transfer Tape 9458 was laminated onto the white polymer layer (3) to provide a pressure-sensitive adhesive layer (4). The coating thickness of the adhesive layer was about 0.025 mm. A 90 g glassine single side siliconized release liner (5) (commercially available from Akrosil BV, Heerlen, Netherlands) was placed onto the adhesive layer (4) to protect the adhesive. In a final step, the release carrier (1) used in the first step of producing the samples was removed prior to laser marking and/or testing.

### Comparative examples C1 and C2

Comparative example C1 was prepared as label 4 except that in the preparation of the top coat of label 4, 100 pph of component B, 0 pph of PVB and 33 pph of component C1 had been used.

In comparative example C2 a label comprising a polyurethane-acrylate topcoat was prepared according to c) above using as black top coat material the "acrylic coating mixture-3 (black)" of EP 1 892 689 to Nguyen et al and using the white base layer "acrylic mixture-1 (white)" of EP 1 892 689 to Nguyen et al.

### Test methods

To carry out the test described below, samples were cut out from the layered sheet materials using either a carpet knife or scissors. As a comparative example commercially available laser-markable label stock, TESA 6930 black on white (available from Beiersdorf, Hamburg, Germany), based on a radiation cross-linked polyurethane acrylate and comprising a 10 µm thick top film, a 50 µm base and a 30 µm thick pressure-sensitive adhesive layer was used.

### Laser Marking

A sample having a size of 50 x 100 mm was subjected to a single laser treatment using Easymark II (diode-pumped Nd: YVO4 laser) from Rofin-Sinar Laser GmbH, 22113 Hamburg, Germany, with the following settings:
Amperage : 25 A; frequency : 25kHz; laser marking speed: 1000 mms.

Efficiency of laser ablation was examined visually using the following ranking:
0 = top-layer still black (little engraving, underlying white layer was not visible),
1 = ½ of the top-layer thickness was engraved (underlying white layer was partially visible, sample appeared grey)
2 = ¾ of the top-layer thickness was engraved (underlying white layer was partially visible)
3 = top-layer was completely engraved (removed) and the underlying white layer was completely and clearly visible.

The following results were obtained:

| Sample | Laser ablation |
|---|---|
| 1 (*) | 3 |
| 2 (*) | 3 |
| 3 | 3 |
| 4 | 3 |
| 5 | 3 |
| 6 | 3 |
| C1 | 2 |
| C2 | 2 |

| | |
|---|---|
| (*) Reference Example | |

### Resistance to toluene / Immersion test

This test was performed according to the information sheet "Identification Labels" published in July 2007 and distributed by the Kraftfahrt-Bundesamt in 24932 Flensburg, Germany. The test specimen were marked by laser treatment as described above for a sufficient time that the top layer was completely removed and the underlying base layer was clearly visible. The test samples were fully emerged in the testing liquid, in this case toluene, for 15 minutes. The test was carried out at 20 +/- 2°C. The test samples were visually inspected for changes in the visibility of the markings.

The following results were obtained:

| Sample | Test result |
|---|---|
| 1 (*) | Sample swelled after 3 minutes, marking was destroyed after 15 minutes dwell time |
| 2 (*) | Sample was intact after 15 minutes |
| 3 | Sample was intact after 15 minutes |
| 4 | Sample was intact after 15 minutes |
| 5 | Sample swelled after 8 minutes, marking was destroyed after 15 minutes |
| 6 | Sample swelled after 10 minutes, marking was destroyed after 15 minutes |

| | |
|---|---|
| (*) Reference Example | |

### Chemical Abrasion Resistance / crockmeter test

The chemical abrasion resistance was tested using the crockmeter test against cotton grain cloth according to DIN EN ISO 105-X12 with ethanol and toluene for testing the wet rub-off. All laser-marked test specimens had a dimension of 50 mm X 140 mm and were conditioned for 4 hours at 20 +/- 2 °C and 65% +/- 2% relative humidity. Test results were determined by visual inspection of the abraded surfaces after 100 cycles using a cylindrical grating pin with a diameter of 16 mm and a contact pressure of 9 +/- 0.2 N. The cylindrical grating pin moved back and forth over the test surface over a length of 104 +/-3 mm.

The following ratings were used:

| | | |
|---|---|---|
| - | = bad | marking has been destroyed |
| + | = good | marking was slightly damaged |
| ++ | = very good | no noticeable change |

The following results were obtained:

| Sample | Chemical abrasion resistance (toluene) | Chemical abrasion resistance (ethanol) |
|---|---|---|
| 1 (*) | + | + |
| 2 (*) | ++ | ++ |
| 3 | ++ | ++ |
| 4 | ++ | ++ |
| 5 | + | ++ |
| 6 | + | ++ |

| | | |
|---|---|---|
| (*) Reference Example | | |

## Claims

1. A layered material comprising:
(i) a first layer comprising polyvinylbutyral (PVB) and a polyester, wherein the polyvinylbutyral is cross-linked with the polyester, and
(ii) a second layer comprising an adhesive, wherein the first layer comprises irradiation-treated areas, and wherein the irradiation is laser irradiation.

2. The layered material according to claim 1, wherein the irradiation-treated areas form at least one letter, at least one geometrical shape or a combination thereof.

3. The layered material according to any one of the preceding claims wherein the layered material comprises laser-sensitive pigments.

4. The layered material according to any one of the preceding claims wherein the first layer is colored and wherein the layered material contains a third layer, the third layer being positioned between first layer and second layer and wherein the third layer is colored differently than the first layer.

5. The layered material according to claim 4, wherein the third layer is separated from the first layer by one or more transparent layers.

6. The layered material according to any one of the preceding claims wherein the layered material is in the form of a sheet.

7. The layered material according to any one of the preceding claims wherein the layered material is in the form of a sheet wound up in a roll.

8. The layered material according to any one of claims 1 to 7, wherein the layered material is a label or a decorative film.

9. An article to which the layered material of any one of claims 1 to 8 has been adhered by the second layer of the layered material.

10. The article according to claim 9, wherein the article is selected from fuel managing systems, engines, fuel reservoirs, bodies of vehicles or a component thereof.

11. Method of making a decorative film or a label comprising:
a) providing a layered-material containing a first layer containing polyvinylbutyral and a polyester, wherein the polyvinylbutyral is cross-linked with the polyester; and a second layer containing an adhesive
b) treating the first layer with laser irradiation to generate a pattern displaying information or an image.

12. Use of a layered material comprising:
(i) a first layer comprising polyvinylbutyral (PVB) and a polyester, wherein the polyvinylbutyral is cross-linked with the polyester, and
(ii) a second layer comprising an adhesive
for making laser-marked labels or decorative films.

## Patentansprüche

1. Geschichtetes Material, umfassend:
(i) eine erste Schicht, die Polyvinylbutyral (PVB) und ein Polyester umfasst, wobei das Polyvinylbutyral mit dem Polyester vernetzt ist, und
(ii) eine zweite Schicht, einen Kleber umfassend, wobei die erste Schicht mit Bestrahlung behandelte Bereiche umfasst, und wobei die Bestrahlung Laserbestrahlung ist.

2. Geschichtetes Material nach Anspruch 1, wobei die mit Bestrahlung behandelten Bereiche mindestens einen Buchstaben, mindestens eine geometrische Form oder eine Kombination davon bilden.

3. Geschichtetes Material nach einem der vorstehenden Ansprüche, wobei das geschichtete Material laserempfindliche Pigmente umfasst.

4. Geschichtetes Material nach einem der vorstehenden Ansprüche, wobei die erste Schicht farbig ist, und wobei das geschichtete Material eine dritte Schicht enthält, wobei sich die dritte Schicht zwischen erster und zweiter Schicht befindet und wobei die dritte Schicht eine andere Farbe als die erste Schicht aufweist.

5. Geschichtetes Material nach Anspruch 4, wobei die dritte Schicht von der ersten Schicht durch eine oder mehrere transparente Schichten getrennt ist.

6. Geschichtetes Material nach einem der vorstehenden Ansprüche, wobei das geschichtete Material die Form eines Bahnenmaterials aufweist.

7. Geschichtetes Material nach einem der vorstehenden Ansprüche, wobei das geschichtete Material die Form eines zusammengerollten Bahnenmaterials aufweist.

8. Geschichtetes Material nach einem der Ansprüche 1 bis 7, wobei das geschichtete Material ein Etikett oder eine Dekorfolie ist.

9. Gegenstand, auf den das geschichtete Material nach einem der Ansprüche 1 bis 8 mit der zweiten Schicht des geschichteten Materials geklebt wurde.

10. Gegenstand nach Anspruch 9, wobei der Gegenstand aus Kraftstoffverwaltungssystemen, Motoren, Kraftstofftanks, Fahrzeugkarosserien oder einem Bestandteil davon ausgewählt ist.

11. Verfahren zur Herstellung einer Dekorfolie oder eines Etiketts, umfassend:
a) Bereitstellen eines geschichteten Materials, enthaltend eine erste Schicht, die Polyvinylbutyral und ein Polyester enthält, wobei das Polyvinylbutyral mit dem Polyester vernetzt ist; und eine zweite Schicht, die einen Klebstoff enthält
b) Behandeln der ersten Schicht mit Laserbestrahlung, um ein Muster zur Wiedergabe von Informationen oder eine Abbildung zu erzeugen.

12. Verwendung von geschichtetem Material, umfassend:
(i) eine erste Schicht, die Polyvinylbutyral (PVB) und ein Polyester umfasst, wobei das Polyvinylbutyral mit dem Polyester vernetzt ist, und
(ii) eine zweite Schicht, die einen Klebstoff umfasst,
zur Herstellung laserbeschrifteter Etiketten oder Dekorfolien.

## Revendications

1. Matériau multicouche comprenant:
(i) une première couche comprenant du polyvinylbutyral (PVB) et un polyester, dans lequel le polyvinylbutyral est réticulé avec le polyester, et
(ii) une deuxième couche comprenant un adhésif, dans lequel la première couche comprend des zones traitées par rayonnement, et dans lequel le rayonnement est un rayonnement laser.

2. Matériau multicouche selon la revendication 1, dans lequel les zones traitées par rayonnement forment au moins une lettre, au moins une forme géométrique ou une combinaison de celles-ci.

3. Matériau multicouche selon l'une quelconque des revendications précédentes, dans lequel le matériau multicouche comprend des pigments sensibles au laser.

4. Matériau multicouche selon l'une quelconque des revendications précédentes, dans lequel la première couche est colorée et dans lequel le matériau multicouche contient une troisième couche, la troisième couche étant placée entre la première couche et la deuxième couche et dans lequel la couleur de la troisième couche est différente de celle de la première couche.

5. Matériau multicouche selon la revendication 4, dans lequel la troisième couche est séparée de la première couche par une ou plusieurs couches transparentes.

6. Matériau multicouche selon l'une quelconque des revendications précédentes, dans lequel le matériau multicouche se présente sous la forme d'une feuille.

7. Matériau multicouche selon l'une quelconque des revendications précédentes, dans lequel le matériau multicouche se présente sous la forme d'une feuille enroulée en rouleau.

8. Matériau multicouche selon l'une quelconque des revendications 1 à 7, dans lequel le matériau multicouche est une étiquette ou un film décoratif.

9. Article sur lequel le matériau multicouche selon l'une quelconque des revendications 1 à 8 a été collé par la deuxième couche du matériau multicouche.

10. Article selon la revendication 9, dans lequel l'article est choisi parmi les éléments suivants: systèmes gestion de carburant, moteurs, réservoirs de carburant, carrosseries de véhicules ou un composant de ceux-ci.

11. Procédé de fabrication d'un film décoratif ou d'une étiquette comprenant:
a) fournir un matériau multicouche contenant une première couche contenant du polyvinylbutyral et un polyester, dans lequel le polyvinylbutyral est réticulé avec le polyester; et une deuxième couche contenant un adhésif
b) traiter la première couche par rayonnement laser pour générer un motif affichant des informations ou une image.

12. Utilisation d'un matériau multicouche comprenant:
(i) une première couche comprenant du polyvinylbutyral (PVB) et un polyester, dans lequel le polyvinylbutyral est réticulé avec le polyester, et
(ii) une deuxième couche comprenant un adhésif
pour produire des étiquettes ou des films décoratifs marqués au laser.
